# FASCICULE DE BREVET EUROPEEN

(11) **EP 0 801 632 B1**
(45) Date de publication et mention de la délivrance du brevet: **10.10.2001**
(21) Numéro de dépôt: 96937359.6
(22) Date de dépôt: 30.10.1996
(51) Int. Cl.: C01B 17/04, B01D 53/86

(54) **PROCEDE D'ELIMINATION QUASI TOTALE DES COMPOSES SOUFRES H2S, SO2, COS ET/OU CS2 CONTENUS DANS UN GAZ RESIDUAIRE D'USINE A SOUFRE, AVEC RECUPERATION DESDITS COMPOSES SOUS LA FORME DE SOUFRE**
VERFAHREN ZUR QUASITOTALER ENTFERNUNG DER SCHWEFELVERBINDUNGEN H2S, SO2, COS UND/ODER CS2 AUS DENSELBEN ENTHALTENDEN RESTLICHEN RAUCHGASEN EINER SCHWEFELANLAGE MIT RÜCKGEWINNUNG DIESER VERBINDUNGEN ALS SCHWEFEL
METHOD FOR REMOVING VIRTUALLY ALL THE SULPHUR COMPOUNDS H2S, SO2, COS AND/OR CS2 FROM SULPHUR PLANT WASTE GASES, AND RECOVERING SUCH COMPOUNDS AS SULPHUR

(30) Priorité: 03.11.1995 FR 9512988; 25.10.1996 FR 9613051
(43) Date de publication de la demande: 22.10.1997
(73) Titulaire: ELF AQUITAINE PRODUCTION, 92400 Courbevoie (FR)
(72) Inventeur: NOUGAYREDE, Jean, F-64000 Pau (FR); PHILIPPE, André, F-64300 Orthez (FR); SAVIN-PONCET, Sabine, F-64160 Buros (FR)
(74) Mandataire: Cabinet Hirsch
(86) Numéro de dépôt international: FR9601698
(87) Numéro de publication internationale: WO9717283

(56) Documents cités:
- EP-A- 0 218 302
- EP-A- 0 346 218
- EP-A- 0 424 259
- WO-A-87/02654
- WO-A-94/21359

## Description

L'invention concerne un procédé pour l'élimination quasi totale des composés soufrés H₂S, SO₂, COS et/ou CS₂ contenus dans un gaz résiduaire d'usine à soufre, avec récupération desdits composés sous la forme de soufre.

Les gaz résiduaires provenant d'une usine à soufre dans laquelle du soufre est produit par le procédé CLAUS d'oxydation ménagée d'un gaz acide renfermant de l'H₂S, au moyen d'un gaz renfermant de l'oxygène libre, contiennent de l'ordre de 0,2 % à 4 % en volume de composés soufrés dont une forte proportion consiste en H₂S, le reste étant constitué de SO₂, COS, CS₂ et de soufre vapeur et/ou vésiculaire.

De tels gaz résiduaires sont couramment traités pour en abaisser au maximum la teneur globale en composés soufrés dans le but de permettre leur rejet à l'atmosphère, après les avoir incinérés, en respectant les normes imposées par la législation en matière de pollution atmosphérique et simultanément de récupérer ces composés soufrés sous une forme contribuant à augmenter le rendement en produits valorisables formés à partir du gaz acide traité dans l'usine à soufre.

Dans la citation EP-A-0346218, on propose un procédé de traitement de gaz résiduaires qui sont issus d'une usine à soufre, dans laquelle on réalise une oxydation ménagée de l'H₂S d'un gaz acide au moyen d'un gaz renfermant de l'oxygène libre, et qui renferment H₂S, SO₂, COS et/ou CS₂, ledit procédé permettant de récupérer la quasi totalité des composés COS et CS₂ sous la forme de soufre. Ce procédé consiste à mettre le gaz résiduaire issu de l'usine à soufre en contact avec un catalyseur d'hydrolyse des composés COS et CS₂ en H₂S, disposé dans une unité d'oxydation et d'hydrolyse, en opérant à une température suffisante pour produire un gaz résiduaire hydrolysé renfermant H₂S et SO₂ et substantiellement exempt de COS et CS₂, à faire passer le gaz résiduaire hydrolysé dans une unité d'épuration, après avoir amené la température dudit gaz à la valeur requise pour son passage dans l'unité d'épuration, en amenant les composés H₂S et SO₂ du gaz résiduaire hydrolysé à réagir entre eux dans ladite unité pour former du soufre et obtenir, en sortie de cette unité, un gaz résiduaire substantiellement épuré à faible teneur résiduelle en composés soufrés et à ajuster en continu le rapport molaire H₂S : SO₂ dans le gaz résiduaire hydrolysé à une valeur sensiblement égale à 2 : 1 à l'entrée de l'unité d'épuration en faisant varier le rapport des débits de gaz acide renfermant H₂S et de gaz renfermant de l'oxygène libre introduits dans l'usine à soufre.

Dans la citation EP-A-0424259, on propose un perfectionnement au procédé précité, qui permet d'améliorer la qualité de la régulation du rapport molaire H₂S : SO₂ dans le gaz résiduaire hydrolysé entrant dans l'unité d'épuration et généralement de limiter ou de réduire la teneur en H₂S et SO₂ dudit gaz résiduaire hydrolysé. Ledit perfectionnement consiste à maintenir à une valeur égale ou supérieure à 2 : 1 le rapport molaire H₂S : SO₂ dans le gaz résiduaire issu de l'usine à soufre et entrant dans l'unité d'oxydation et d'hydrolyse en faisant varier le rapport des débits de gaz acide renfermant de l'H₂S et de gaz renfermant de l'oxygène libre introduits dans l'usine à soufre, à introduire dans l'unité d'oxydation et d'hydrolyse un flux gazeux contenant de l'oxygène libre et à effectuer dans ladite unité une oxydation d'H₂S en SO₂ et éventuellement en soufre au moyen dudit flux gazeux au contact d'un catalyseur d'oxydation de l'H₂S contenu dans cette unité, et à maintenir à la valeur substantiellement égale à 2 : 1 le rapport molaire H₂S : SO₂ dans le gaz résiduaire hydrolysé entrant dans l'unité d'épuration en faisant varier le débit du flux gazeux contenant de,l'oxygène libre introduit dans l'unité d'oxydation et d'hydrolyse.

La citation EP-A-0218302 décrit, entre autres, un procédé de traitement de gaz résiduaires contenant H₂S, et SO₂, en faibles concentrations et dans un rapport molaire H₂S:SO₂ allant dé 2,2:1 à 4:1, et renfermant en outre COS et CS₂. Dans un tel procédé, le gaz résiduaire est tout d'abord soumis à une hydrolyse catalytique, mise en oeuvre à une température de 200°C à 350°C, de manière à transformer en H₂S les composés COS et CS₂. Le gaz résiduaire hydrolysé est ensuite mis en contact avec un catalyseur opérant à une température allant de 80°C à 150°C pour réaliser la réaction entre H₂S et SO₂ produisant du soufre (2H₂S + SO₂ ⇔ 3S + 2H₂O), lequel soufre se dépose sur le catalyseur, et un gaz résiduaire substantiellement épuré renfermant H₂S comme seul composant soufré. Ledit gaz résiduaire substantiellement épuré additionné d'une quantité appropriée d'oxygène sous la forme d'air (environ 1,5 fois la quantité stoechiométrique) est mis en contact avec un catalyseur d'oxydation directe de l'H₂S en soufre (H₂S + 1/2 O₂ → S + H₂O), opérant également à une température de 80°C à 150°C, avec production de soufre, qui se dépose sur le catalyseur, et d'un gaz résiduaire désulfuré. Les catalyseurs chargés de soufre sont soumis périodiquement à un traitement de régénération. Dans l'exemple de la citation, on traite un gaz renfermant H₂S et SO₂, en concentrations, exprimées en pourcentages volumiques (H₂S) et (SO₂), égales à 1,2% et 0,5% respectivement, et exempt de COS et CS₂, le gaz épuré renfermant, en volume, 165 ppm de composés soufrés (essentiellement SO₂) et le rendement en soufre étant de 99%. Pour ladite teneur en SO₂ égale à 0,5% en volume dans le gaz à épurer, la teneur volumique en H₂S dans ledit gaz peut, selon la citation, varier de 1,1% à 2% pour un rapport molaire H₂S:SO₂ allant de 2,2:1 à 4 :1, ce qui correspond à des valeurs situées dans l'intervalle 0,1% à 1% pour la quantité (H₂S)-2(SO₂). Pour le gaz que l'on traite dans l'exemple de la citation, la quantité (H₂S)-2(SO₂) prend la valeur 0,2%. D'autre part, dans cet exemple, on impose une température d'environ 125°C au gaz résiduaire substantiellement épuré, pour son introduction dans l'unité d'oxydation catalytique, et l'on met en oeuvre l'oxydation catalytique de l'H₂S en soufre, dans ladite unité, à des températures supérieures à 125°C.

Selon l'invention, on propose un procédé d'élimination des composés soufrés H₂S, SO₂, COS et/ou CS₂ contenus dans un gaz résiduaire d'usine à soufre de type CLAUS, qui constitue un perfectionnement aux procédés décrits dans les citations mentionnées ci-dessus et qui conduit à une élimination plus poussée desdits composés soufrés, avec comme résultat la possibilité, pour l'ensemble de traitement du gaz acide associant l'usine à soufre et l'installation mettant en oeuvre le procédé selon l'invention, d'atteindre des rendements globaux en soufre récupéré de 99,9% au moins.

Le procédé selon l'invention pour l'élimination quasi totale des composés soufrés H₂S, SO₂, COS et/ou CS₂ contenus dans un gaz résiduaire d'une usine à soufre, qui réalise une oxydation ménagée de l'H₂S d'un gaz acide au moyen d'un gaz renfermant de l'oxygène libre, avec récupération desdits composés soufrés sous la forme de soufre, est du type dans lequel on met en contact ledit gaz résiduaire issu de l'usine à soufre avec un catalyseur d'hydrolyse des composés COS et CS₂ en H₂S, disposé dans une unité d'oxydation et d'hydrolyse, en opérant à une température suffisante pour produire un gaz résiduaire hydrolysé renfermant H₂S et SO₂ et substantiellement exempt de COS et CS₂, on fait passer le gaz résiduaire hydrolysé dans une unité d'épuration, après avoir amené la température dudit gaz à la valeur requise pour son passage dans cette unité, et amène les composés H₂S et SO₂ du gaz résiduaire hydrolysé à réagir entre eux dans l'unité d'épuration pour former du soufre et obtenir, en sortie de cette unité, un gaz résiduaire substantiellement épuré renfermant H₂S comme seul composé soufré et on introduit le gaz résiduaire substantiellement épuré dans une unité d'oxydation catalytique renfermant un catalyseur d'oxydation sélective de l'H₂S en soufre et l'on maintient le gaz résiduaire substantiellement épuré dans cette unité d'oxydation catalytique au contact du catalyseur d'oxydation en présence d'une quantité d'oxygène, injectée dans ladite unité d'oxydation catalytique sous la forme d'un courant gazeux renfermant de l'oxygène libre, en excès par rapport à la quantité stoechiométrique nécessaire pour oxyder en soufre l'H₂S du gaz résiduaire substantiellement épuré, en mettant en oeuvre l'oxydation à des températures inférieures à 150°C et il se caractérise en ce que l'on maintient les concentrations en H₂S et SO₂, exprimées en pourcentages volumiques (H₂S) et (SO₂), dans le gaz résiduaire hydrolysé entrant dans l'unité d'épuration à des valeurs telles que la quantité (H₂S)-2(SO₂) aille de 0,25% à 0,5%, en ce que la température du gaz résiduaire substantiellement épuré, introduit dans l'unité d'oxydation catalytique, est comprise entre 85°C et 100°C et en ce que l'oxydation de l'H₂S en soufre dans l'unité d'oxydation catalytique est réalisée à des températures allant de 90°C à 120°C.

Plus spécialement, on maintient les concentrations en H₂S et SO₂ dans le gaz résiduaire hydrolysé entrant dans l'unité d'épuration à des valeurs telles que la quantité (H₂S)-2(SO₂) aille de 0,25% à 0,35%.

Selon une forme de mise en oeuvre, le maintien de la quantité (H₂S)-2(SO₂) à la valeur allant de 0,25% à 0,5% et plus spécialement de 0,25 % à 0,35 %, dans le gaz résiduaire hydrolysé entrant dans l'unité d'épuration, est réalisé en faisant varier le rapport des débits de gaz acide renfermant H₂S et de gaz renfermant de l'oxygène libre introduits dans l'unité à soufre.

Selon une autre forme de mise en oeuvre, on maintient à une valeur égale ou supérieure à 2 : 1 le rapport molaire H₂S : SO₂ dans le gaz résiduaire issu de l'usine à soufre et entrant dans l'unité d'oxydation et d'hydrolyse en faisant varier le rapport dés débits de gaz acide renfermant H₂S et de gaz renfermant de l'oxygène libre introduits dans l'usine à soufre, on introduit dans l'unité d'oxydation et d'hydrolyse un flux gazeux contenant de l'oxygène libre et effectue dans ladite unité une oxydation d'H₂S en SO₂ et éventuellement en soufre, en plus de l'hydrolyse de COS et/ou CS₂ en H₂S, au moyen dudit flux gazeux au contact d'un catalyseur d'oxydation de l'H₂S contenu dans cette unité et l'on maintient la quantité (H₂S) -2 (SO₂) à la valeur allant de 0,25 % à 0,5 % et plus spécialement de 0,25 % à 0,35 %, dans le gaz résiduaire hydrolysé entrant dans l'unité d'épuration en faisant varier le débit du flux gazeux contenant de l'oxygène libre introduit dans l'unité d'oxydation et d'hydrolyse.

Avantageusement, la réaction d'hydrolyse des composés COS et CS₂ en H₂S et, lorsqu'elle est utilisée, la réaction d'oxydation de l'H₂S que l'on met en oeuvre dans l'unité d'oxydation et d'hydrolyse sont effectuées à des températures comprises entre 180°C et 700°C et de préférence entre 250°C et 400°C.

Lorsque l'on réalise uniquement une hydrolyse des composés COS et CS₂ en H₂S dans l'unité d'oxydation et d'hydrolyse, ladite unité renferme un catalyseur promoteur de ladite réaction d'hydrolyse. Par contre, lorsque l'on effectue une hydrolyse des composés COS et CS₂ en H₂S et une oxydation de l'H₂S dans l'unité d'oxydation et d'hydrolyse, ladite unité peut renfermer soit un catalyseur promoteur de la réaction d'hydrolyse et un catalyseur promoteur de la réaction d'oxydation, utilisés en mélange ou sous la forme de lits séparés, ou, avantageusement, un catalyseur unique susceptible de promouvoir simultanément les deux réactions.

Parmi les catalyseurs utilisables pour promouvoir la réaction d'hydrolyse des composés COS et CS₂ en H₂S et la réaction d'oxydation de l'H₂S, on peut citer en particulier :
- les catalyseurs à base d'alumine, c'est-à-dire formés d'un matériau renfermant, en poids, au moins 50 % et avantageusement au moins 90 % d'alumine activée et notamment les catalyseurs consistant en alumines activées choisies parmi les alumines activées utilisées pour promouvoir la réaction de CLAUS de formation de soufre entre H₂S et SO₂ ;
- les catalyseurs résultant de l'association d'au moins un composé de métal choisi parmi Fe, Ni, Co, Cu, Zn, Cr et Mo avec un support de silice ou/et d'alumine, tels que ceux décrits dans la citation FR-A- 2327960 ;
- les catalyseurs résultant de l'association d'au moins un composé de métal pris parmi Fe, Cu, Cd, Zn, Cr, Mo, W, V, Co, Ni et Bi et éventuellement d'au moins un composé d'un métal noble tel que Pt, Pd, Ir et Rh, avec un support consistant en une alumine activée stabilisée thermiquement, notamment par une faible quantité d'au moins un oxyde de terre rare, comme décrit dans la citation FR-A-2540092, ou avec un support de silice ou/et d'oxyde de titane, comme indiqué dans la citation FR-A-2511663 ;
- les catalyseurs contenant de l'oxyde de titane et en particulier les catalyseurs consistant en oxyde de titane tels que ceux décrits dans la citation FR-A-2481145, ou bien les catalyseurs renfermant un mélange d'oxyde de titane et d'un sulfate d'un métal alcalino-terreux choisi parmi Ca, Sr, Ba et Mg et en particulier les catalyseurs décrits dans la citation EP-A-0060741 pour lesquels le rapport de la proportion pondérale d'oxyde de titane, exprimée en TiO₂, à la proportion pondérale de sulfate alcalino-terreux dans le catalyseur calciné peut aller de 99 : 1 à 60 : 40 et plus particulièrement de 99 : 1 à 80 : 20, ou bien encore les catalyseurs à base d'oxyde de titane associé à un support tel que silice, alumine ou zéolithe.

Les catalyseurs d'oxydation et d'hydrolyse à base d'alumine ont des surfaces spécifiques, déterminées par la méthode d'adsorption d'azote dite méthode BET (norme NF X 11-621), allant avantageusement de 5 m²/g à 400 m²/g et plus particulièrement de 40 m²/g à 250 m²/g. Les catalyseurs d'oxydation et d'hydrolyse à base d'oxyde de titane ont des surfaces spécifiques selon la méthode BET comprises entre 5 m²/g et 400 m²/g et plus spécialement entre 10 m²/g et 250 m²/g.

Lorsque l'on injecte un flux gazeux contenant de l'oxygène libre dans l'unité d'oxydation et d'hydrolyse, ledit flux gazeux peut être amené à ladite unité séparément du gaz résiduaire d'usine à soufre à traiter. On préfère toutefois réaliser tout d'abord un mélange dudit flux gazeux et dudit gaz résiduaire, puis introduire le mélange obtenu dans l'unité d'oxydation et d'hydrolyse.

Le temps de séjour global des gaz, à savoir gaz résiduaire d'usine à soufre seul ou mélange. du gaz résiduaire d'usine à soufre et du flux gazeux contenant de l'oxygène libre, au contact du catalyseur ou des catalyseurs contenus dans l'unité d'oxydation et d'hydrolyse peut aller de 0,5 seconde à 10 secondes et en particulier de 1 seconde à 6 secondes, ces valeurs étant données dans les conditions normales de pression et de température.

Pour amener le gaz résiduaire hydrolysé, issu de l'unité d'oxydation et d'hydrolyse, à la température requise pour son passage dans l'unité d'épuration, on peut opérer avantageusement par échange indirect de chaleur avec un fluide ayant une température appropriée.

Le maintien de la quantité (H₂S)-2(SO₂) à la valeur allant de 0, 25 % à 0,5 % et plus spécialement de 0,25 % à 0,35 % dans le gaz résiduaire hydrolysé entrant dans l'unité d'épuration, lorsque l'unité d'oxydation et d'hydrolyse est uniquement le siège d'une hydrolyse des composés COS et CS₂ en H₂S, de même que le maintien du rapport molaire H₂S : SO₂ à la valeur égale ou supérieure à 2 : 1 dans le gaz résiduaire issu de l'usine à soufre, lorsque l'unité d'oxydation et d'hydrolyse est le siège d'une hydrolyse des composés COS et CS₂ en H₂S et d'une oxydation de l'H₂S, peuvent être réalisés en faisant appel aux diverses méthodes de régulation connues pour maintenir une grandeur, ici la quantité (H₂S)-2(SO₂) ou le rapport molaire H₂S : SO₂, à une valeur prédéterminée dans le gaz renfermant les composés H₂S et SO₂, par variation du rapport des débits de gaz acide renfermant H₂S et de gaz renfermant de l'oxygène libre introduits dans l'usine à soufre, ladite variation étant avantageusement effectuée en maintenant constant le débit de gaz acide renfermant H₂S introduit dans l'usine à soufre et en faisant varier le débit de gaz renfermant de l'oxygène libre.

Dans la plupart de ces méthodes de régulation, on effectue une analyse d'un échantillon du gaz renfermant H₂S et SO₂ pour en déterminer les teneurs molaires en ces composés et produire à partir desdites teneurs une grandeur représentative de la valeur instantanée du rapport molaire H₂S : SO₂ ou de la quantité (H₂S)-2(SO₂) dans ledit gaz, puis on élabore une grandeur représentative du débit de correction du gaz renfermant de l'oxygène libre amené à l'usine à soufre pour ramener ladite valeur instantanée du rapport molaire H₂S : SO₂ ou de la quantité (H₂S)-2(SO₂) à la valeur prédéterminée et on utilise la grandeur ainsi élaborée pour ajuster le débit dudit gaz renfermant de l'oxygène libre amené à l'usine à soufre, cet ajustement de débit étant opéré soit sur la totalité du débit de gaz renfermant de l'oxygène libre ou seulement sur un débit additionnel faible s'ajoutant à un débit principal plus important et proportionnel à la quantité d'H₂S présent dans le gaz acide amené à l'usine à soufre. La technique d'analyse de l'échantillon de gaz renfermant H₂S et SO₂ mise en oeuvre dans ces méthodes de régulation peut être par exemple, une technique d'analyse par chromatographie en phase gazeuse (US-A-3026184 et FR-A-2118365), une technique d'analyse par absorption dans l'ultra-violet (THE OIL AND GAS JOURNAL, 10 Août 1970, pages 155 à 157) ou encore une technique d'analyse par spectrométrie interférentielle (FR-A-2420754).

Dans la forme de mise en oeuvre comportant l'introduction d'un flux gazeux contenant de l'oxygène libre dans l'unité d'oxydation et d'hydrolyse, le maintien de la quantité (H₂S)-2(SO₂) à la valeur allant de 0,25 % à 0,5 % et plus spécialement de 0,25 % à 0,35 % dans le gaz résiduaire hydrolysé entrant dans l'unité d'épuration est réalisé en faisant varier le débit dudit flux gazeux contenant de l'oxygène libre. Pour ce faire, on peut utiliser également les méthodes de régulation décrites ci-dessus, l'ajustement du débit du flux gazeux contenant de l'oxygène libre étant effectué sur la totalité du débit dudit flux. La qualité de la régulation du débit du flux gazeux contenant de l'oxygène libre introduit dans l'unité d'oxydation et d'hydrolyse est pratiquement parfaite car, d'une part, le temps de réponse du système n'est que de quelques secondes et, d'autre part, le débit dudit flux gazeux à réguler est faible et peut donc être parfaitement ajusté.

Le gaz renfermant de l'oxygène libre, que l'on introduit dans l'usine à soufre pour effectuer l'oxydation ménagée de l'H₂S du gaz acide, ainsi que le courant gazeux contenant de l'oxygène libre que l'on injecte dans l'unité d'oxydation catalytique et que le flux gazeux contenant de l'oxygène libre, éventuellement introduit dans l'unité d'oxydation et d'hydrolyse, sont généralement de l'air, bien qu'il soit possible d'employer de l'oxygène pur ou encore de l'air enrichi en oxygène ou même des mélanges, en proportions variées, d'oxygène et d'un ou plusieurs gaz inertes autres que l'azote.

Selon l'invention, on désigne par usine à soufre, toute installation dans laquelle on introduit un gaz acide renfermant H₂S comme seul composé soufré, ainsi qu'une quantité contrôlée d'un gaz renfermant de l'oxygène libre et effectue une oxydation ménagée de l'H₂S du gaz acide par l'oxygène du gaz contenant de l'oxygène libre pour produire du soufre et en sortie de laquelle on évacue également un gaz résiduaire renfermant H₂S, SO₂, COS et/ou CS₂. En particulier, l'usine à soufre peut être une usine à soufre CLAUS, dans laquelle on effectue une combustion d'une fraction de l'H₂S du gaz acide dans une zone de combustion fonctionnant à température élevée pour produire un effluent gazeux renfermant H₂S et SO₂ et éventuellement du soufre élémentaire et l'on fait passer ledit effluent gazeux, après séparation du soufre qu'il peut contenir par condensation, au contact d'un catalyseur CLAUS disposé dans une ou plusieurs zones de réaction catalytique opérant à des températures supérieures au point de rosée du soufre contenu dans l'effluent pour former une nouvelle quantité de soufre par réaction entre H₂S et SO₂, ledit soufre étant séparé par condensation après chaque étape de réaction catalytique. Dans une telle usine à soufre CLAUS, la combustion partielle de l'H₂S du gaz acide pour former l'effluent renfermant H₂S et SO₂ est réalisée à des températures comprises entre 900°C et 1600°C et la réaction entre H₂S et SO₂, au contact du catalyseur CLAUS opérant à des températures supérieures au point de rosée du soufre contenu dans le milieu réactionnel, est effectuée à des températures comprises entre 180°C et 450°C dans au moins une zone de réaction catalytique et de préférence dans une pluralité de zones de réaction catalytique disposées en série. Dans ce dernier cas, les températures de fonctionnement des différentes zones de réaction catalytique vont en décroissant d'une zone de réaction catalytique à la suivante. Après chacune des phases de réaction, le soufre produit contenu dans le milieu réactionnel est séparé par condensation et le milieu réactionnel substantiellement débarrassé du soufre est réchauffé jusqu'à la température choisie pour la phase subséquente de réaction. La température du gaz résiduaire issu de l'usine à soufre correspond sensiblement à la température à laquelle le milieu réactionnel produit au cours de la dernière phase de réaction dans l'usine à soufre a été refroidi pour condenser le soufre qu'il contient, ladite température étant généralement comprise entre 120°C et 160°C.

L'unité d'épuration dans laquelle on traite le gaz résiduaire hydrolysé peut consister en toute installation permettant de produire du soufre par réaction entre H₂S et SO₂ et d'obtenir un gaz résiduaire substantiellement épuré renfermant H₂S comme seul composé soufré en concentration inférieure à 0,5 % en volume. L'unité d'épuration peut être en particulier une unité d'épuration dans laquelle la réaction de formation de soufre entre H₂S et SO₂ est mise en oeuvre au contact d'un catalyseur CLAUS à des températures supérieures au point de rosée du soufre formé ou au contraire à des températures inférieures audit point de rosée ou bien encore tout d'abord à des températures supérieures au point de rosée du soufre formé puis à des températures inférieures audit point de rosée.

En particulier, on peut faire appel à une unité d'épuration catalytique CLAUS basse température, dans laquelle le gaz résiduaire hydrolysé, présentant une température inférieure à 160°C, est mis en contact avec un catalyseur CLAUS pour former du soufre par réaction entre H₂S et SO₂ en réalisant ledit contact à une température inférieure au point de rosée du soufre formé, par exemple entre 100°C et 180°C, pour que ce soufre se dépose sur le catalyseur CLAUS, le catalyseur chargé de soufre étant périodiquement soumis à une régénération par balayage au moyen d'un gaz non oxydant entre 200°C et 500°C, par exemple entre 250°C et 450°C, pour vaporiser le soufre qu'il retient, puis à un refroidissement au moyen d'un gaz à température inférieure à 160°C jusqu'à la température requise pour une nouvelle mise en contact avec le gaz résiduaire hydrolysé, ledit gaz pouvant renfermer de la vapeur d'eau au moins pendant la phase finale dudit refroidissement. Le gaz de balayage, utilisé pour la régénération du catalyseur CLAUS chargé de soufre contenu dans l'unité CLAUS basse température, peut être tel que méthane, azote, CO₂ ou mélanges de tels gaz ou peut encore consister en une fraction du gaz résiduaire substantiellement épuré issu de l'unité d'épuration catalytique CLAUS basse température ou en une fraction du gaz résiduaire hydrolysé. Le gaz de balayage utilisé pour la régénération précitée peut éventuellement contenir une certaine proportion d'un composé réducteur gazeux, par exemple H₂, CO ou H₂S, au moins au cours de la phase finale de la régénération, c'est-à-dire après la vaporisation dé la plus grande partie du soufre déposée. sur le catalyseur CLAUS. L'unité d'épuration CLAUS basse température peut être constituée d'un étage unique de réaction CLAUS basse température, qui opère alternativement en phase de réaction CLAUS et en phase de régénération/refroidissement. Avantageusement, l'unité d'épuration catalytique CLAUS basse température est formée d'une pluralité d'étages de réaction CLAUS, qui opèrent de telle sorte que l'un au moins desdits étages opère en phase de régénération/refroidissement, tandis que les autres étages sont en phase de réaction CLAUS basse température. On peut encore opérer dans une unité d'épuration catalytique CLAUS basse température comportant un ou plusieurs étages en phase de réaction CLAUS basse température, au moins un étage en phase de régénération et au moins un étage en phase de refroidissement.

Le gaz résiduaire substantiellement épuré, qui est issu de l'unité d'épuration et renferme H₂S comme seul composé soufré en concentration inférieure à 0,5 % en volume, est injecté, à température comprise entre 85°C et 100°C, dans l'unité d'oxydation catalytique qui renferme un catalyseur d'oxydation sélective de l'H₂S en soufre. Dans cette unité d'oxydation catalytique, on introduit également une quantité -d'oxygène, sous la forme d'un courant gazeux contenant de l'oxygène libre en excès, par exemple excès pouvant aller de deux à quinze fois la quantité stoechiométrique requise pour oxyder en soufre la totalité de l'H₂S présent dans le gaz résiduaire substantiellement épuré injecté dans l'unité d'oxydation catalytique.

Pour amener le gaz résiduaire substantiellement épuré, issu de l'unité d'épuration, à la température comprise entre 85°C et 100°C pour l'introduction dans l'unité d'oxydation catalytique, on peut opérer avantageusement par échange indirect de chaleur avec un fluide ayant une température appropriée.

Le courant gazeux renfermant de l'oxygène libre peut être introduit dans l'unité d'oxydation catalytique séparément du gaz résiduaire substantiellement épuré. Il est toutefois préférable de prémélanger ces deux gaz avant leur injection dans l'unité d'oxydation catalytique afin d'obtenir un milieu réactionnel très homogène lors du contact avec le catalyseur présent dans ladite unité d'oxydation catalytique.

Les temps de contact du milieu réactionnel gazeux, formé par la mise en présence du courant gazeux renfermant de l'oxygène libre et du gaz résiduaire substantiellement épuré dans l'unité d'oxydation catalytique, avec le catalyseur d'oxydation contenu dans ladite unité, peuvent aller de 0,5 seconde à 20 secondes et plus particulièrement de 1 seconde à 15 secondes, ces valeurs étant données dans les conditions normales de pression et de température.

Le catalyseur d'oxydation présent dans l'unité d'oxydation catalytique peut être choisi parmi les divers catalyseurs d'oxydation susceptibles de promouvoir une conversion sélective de l'H₂S en soufre sous l'action de l'oxygène, c'est-à-dire de promouvoir la réaction H₂S+1/2 O₂ → S+H₂O, à des températures allant de 90°C à 120°C, le soufre formé se déposant sur le catalyseur.

En particulier, le catalyseur d'oxydation sélective de l'H₂S en soufre peut être constitué d'une phase active, consistant en un ou plusieurs oxydes et/ou sels d'un ou plusieurs métaux de transition tels que Ni, Co, Fe, Cu, Ag, Mn, Mo, Cr, W et V, déposée sur un support en un matériau réfractaire tel que, par exemple, bauxite, alumine activée et/ou stabilisée, silice, oxyde de titane, oxyde de zirconium, zéolithes, mélanges silice/alumine, mélanges silice/oxyde de titane, mélanges silice/oxyde de zirconium, carbure réfractaire, ou bien sur un support en charbon actif. Le catalyseur d'oxydation présente un volume poreux permettant une charge en soufre importante. Avantageusement, le volume poreux du catalyseur d'oxydation représente 15 cm³ à 70 cm³ par 100 g de catalyseur. Le lit de catalyseur d'oxydation présent dans l'unité d'oxydation catalytique peut être constitué, si besoin est, d'un mélange de catalyseurs différents ou de plusieurs couches de catalyseurs différents tels que précités.

La phase active, comptée en poids de métal, peut représenter 0,1 % à 15 % et plus spécialement 0,2 % à 7 % du poids du catalyseur d'oxydation.

Pour mettre en oeuvre efficacement l'oxydation de l'H₂S en soufre, il est nécessaire de maintenir le catalyseur d'oxydation à des températures allant de 90°C à 120°C tout au long de l'étape d'oxydation de l'H₂S dans l'unité d'oxydation catalytique. Si la concentration en H₂S ou/et la température du gaz résiduaire substantiellement épuré amené au contact du catalyseur d'oxydation, sont telles que, du fait de la forte exothermicité de la réaction d'oxydation de l'H₂S en soufre, la température du milieu réactionnel, à l'issue de l'oxydation est susceptible de dépasser la température de mise en oeuvre de l'oxydation, on évacue les calories dégagées par ladite réaction en soumettant le catalyseur à un refroidissement par toute méthode connue. On peut, par exemple, réaliser ce refroidissement à l'aide d'un fluide froid circulant en échange indirect de chaleur avec ledit catalyseur au sein de ce dernier. On peut encore opérer en plaçant le catalyseur dans un réacteur tubulaire constitué de tubes disposés dans une calandre avec le catalyseur présent dans les tubes et un fluide froid circulant entre les tubes côté calandre ou vice versa.

Au cours de l'oxydation de l'H₂S en soufre dans l'unité d'oxydation catalytique, le catalyseur d'oxydation présent dans cette unité se charge progressivement en soufre. Périodiquement, on procède à la régénération du catalyseur d'oxydation chargé de soufre par balayage dudit catalyseur à l'aide d'un gaz non oxydant en opérant à des températures comprises entre 200°C et 500°C, par exemple entre 250°C et 450°C, pour vaporiser le soufre retenu sur le catalyseur, puis on refroidit le catalyseur régénéré jusqu'à la température choisie pour une nouvelle mise en oeuvre de la réaction d'oxydation, ce refroidissement étant réalisé au moyen d'un gaz ayant une température appropriée. Le gaz de refroidissement peut être éventuellement chargé de vapeur d'eau au moins pendant la phase finale du refroidissement du catalyseur.

Le gaz de balayage, utilisé pour la régénération du catalyseur d'oxydation chargé de soufre de l'unité d'oxydation catalytique peut être choisi parmi les gaz de balayage mentionnés précédemment comme convenant à la régénération du catalyseur CLAUS chargé de soufre de l'unité d'épuration CLAUS basse température.

L'unité d'oxydation catalytique peut être constituée d'un étage unique d'oxydation catalytique, qui opère alternativement en phase d'oxydation catalytique et en phase de régénération/refroidissement. Avantageusement, l'unité d'oxydation catalytique est formée d'une pluralité d'étages d'oxydation catalytique, qui opèrent de telle sorte que l'un au moins desdits étages soit en phase de régénération/refroidissement, tandis que les autres étages sont en phase d'oxydation catalytique. On peut encore opérer dans une unité d'oxydation catalytique comportant un ou plusieurs étages en phase d'oxydation catalytique, au moins un étage en phase de régénération et au moins un étage en phase de refroidissement.

On peut mettre en oeuvre la réaction catalytique CLAUS de formation de soufre entre H₂S et SO₂ à basse température et l'oxydation catalytique de l'H₂S en soufre dans un même réacteur, dit réacteur mixte, qui comporte deux zones catalytiques disposées en série, de préférence à travers un échangeur indirect de chaleur, à savoir une zone de réaction catalytique CLAUS, qui renferme un catalyseur CLAUS apte à promouvoir la réaction entre H₂S et SO₂ et qui est alimentée par le gaz résiduaire hydrolysé issu de l'unité d'oxydation et d'hydrolyse et fournit un courant gazeux renfermant H₂S comme seul composé soufré en concentration inférieure à 0,5 % en volume, et une zone d'oxydation catalytique de l'H₂S en soufre, qui renferme un catalyseur d'oxydation sélective de l'H₂S en soufre comme indiqué précédemment et qui est alimentée simultanément par le gaz résiduaire substantiellement épuré issu de la zone de réaction catalytique CLAUS et par le courant gazeux renfermant de l'oxygène libre comme décrit précédemment. On peut utiliser un réacteur mixte unique, qui opère alternativement en phase de réaction (réaction de CLAUS et réaction d'oxydation de l'H₂S) et en phase de régénération/refroidissement. Avantageusement, on fait appel à une pluralité de réacteurs mixtes qui opèrent de telle sorte que l'un au moins desdits réacteurs est en phase régénération/refroidissement alors que les autres réacteurs sont en phase de réaction, ou bien qu'un ou plusieurs réacteurs sont en phase de réaction alors qu'au moins un réacteur est en phase de régénération et qu'au moins un réacteur est en phase de refroidissement.

La régénération des catalyseurs CLAUS et d'oxydation catalytique chargés de soufre contenus dans un réacteur mixte et le refroidissement des catalyseurs régénérés peuvent être réalisés comme indiqué précédemment pour ces catalyseurs.

Le gaz utilisé, soit pour la régénération du catalyseur CLAUS de l'unité d'épuration CLAUS basse température, soit pour la régénération du catalyseur d'oxydation de l'unité d'oxydation catalytique ou encore pour la régénération des catalyseurs contenus dans un réacteur mixte, circule de préférence en circuit fermé à partir d'une zone de chauffage, en passant successivement par la zone catalytique ou les zones catalytiques en cours de régénération et une zone de refroidissement, dans laquelle la majeure partie du soufre qu'il contient est séparée par condensation, pour revenir à la zone de chauffage. Bien entendu, le gaz de régénération peut également circuler en circuit ouvert.

Le gaz utilisé pour le refroidissement du catalyseur régénéré est du même type que celui employé pour la régénération du catalyseur chargé de soufre. Les circuits de gaz de régénération et de gaz de refroidissement peuvent être indépendants l'un et l'autre. Toutefois, selon un mode de réalisation, le circuit de gaz de régénération défini ci-dessus peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

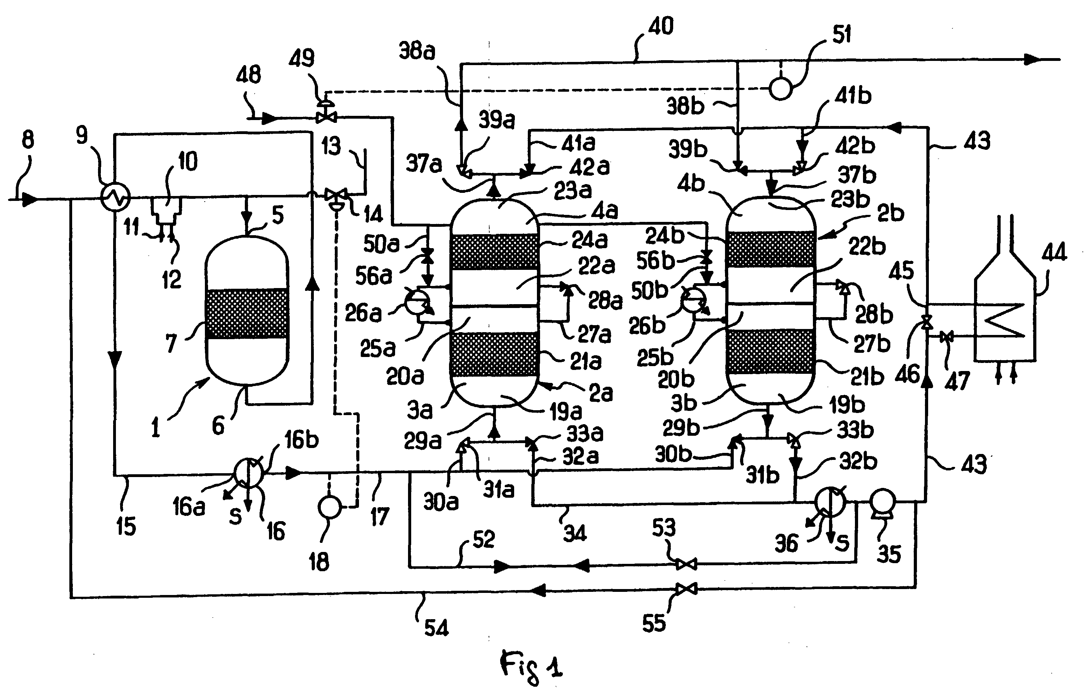

L'invention sera mieux comprise à la lecture de la description donnée ci-après de l'une de ses formes de réalisation utilisant l'installation représentée schématiquement sur la figure unique du dessin annexé.

Cette installation comporte une unité d'oxydation et d'hydrolyse 1 et deux réacteurs mixtes 2a et 2b, lesdits réacteurs étant montés en parallèle et renfermant chacun, montées en série, une unité d'épuration catalytique CLAUS basse température, 3a pour le réacteur 2a et 3b pour le réacteur 2b, et une unité d'oxydation catalytique, 4a pour le réacteur 2a et 4b pour le réacteur 2b.

L'unité d'oxydation et d'hydrolyse 1 comporte une entrée 5 et une sortie 6 séparées l'une et l'autre par un lit fixe 7 d'un catalyseur d'oxydation de l'H₂S en soufre et d'hydrolyse des composés COS et CS₂ en H₂S. Un conduit 8 d'amenée de gaz, sur lequel est monté le circuit froid d'un échangeur indirect de chaleur 9 du type échangeur gaz/gaz et un brûleur en ligne 10 de chauffage d'appoint, pourvu d'une tubulure 11 d'amenée d'un gaz combustible et d'une tubulure 12 d'amenée d'air, connecte l'entrée 5 de l'unité d'oxydation et d'hydrolyse 1 à la source de gaz résiduaire à traiter, par exemple à la sortie d'une usine à soufre non représentée. Un conduit 13 d'amenée d'air est monté en dérivation sur le conduit 8, entre le brûleur en ligne 10 et l'entrée 5 de l'unité d'oxydation et d'hydrolyse 1, ledit conduit 13 étant équipé d'une vanne 14 à ouverture réglable. La sortie 6 de l'unité d'oxydation et d'hydrolyse 1 se prolonge par un conduit 15 d'évacuation pour les gaz, ledit conduit étant connecté, à travers le circuit chaud de l'échangeur indirect de chaleur 9, à l'entrée 16a d'un échangeur indirect de chaleur 16, dont la sortie 16b est prolongée par un conduit 17 sur lequel est monté un régulateur 18 de la quantité (H₂S) - 2(SO₂) dans le gaz évacué de l'unité d'oxydation et d'hydrolyse,lequel régulateur règle l'ouverture de la vanne 14 du conduit 13 d'amenée d'air à l'unité d'oxydation et d'hydrolyse, ce qui assure l'ajustement du débit d'air introduit dans ladite unité.

Dans le réacteur mixte 2a, l'unité d'épuration catalytique 3a présente une première extrémité 19a et une deuxième extrémité 20a séparées par un lit fixe 21a d'un catalyseur promoteur de la réaction CLAUS de formation de soufre entre H₂S et SO₂ et l'unité d'oxydation catalytique 4a présente une première extrémité 22a et une deuxième extrémité 23a séparées par un lit fixe 24a d'un catalyseur promoteur de l'oxydation sélective de l'H₂S en soufre. La deuxième extrémité 20a de l'unité d'épuration 3a est adjacente à la première extrémité 22a de l'unité d'oxydation catalytique 4a et communique avec cette dernière, d'une part, par un premier conduit de liaison 25a sur lequel est monté un échangeur indirect de chaleur 26a et, d'autre part, par un deuxième conduit de liaison 27a sur lequel est monté une vanne 28a. De même, dans le réacteur mixte 2b, l'unité d'épuration catalytique 3b présente une première extrémité 19b et une deuxième extrémité 20b séparées par un lit fixe 21b d'un catalyseur promoteur de la réaction CLAUS de formation de soufre entre H₂S et SO₂ et l'unité d'oxydation catalytique 4b présente une première extrémité 22b et une deuxième extrémité 23b séparées par un lit fixe 24b d'un catalyseur promoteur de l'oxydation sélective de l'H₂S en soufre. La deuxième extrémité 20b de l'unité d'épuration 3b est adjacente à la première extrémité 22b de l'unité d'oxydation catalytique 4b et communique avec cette dernière, d'une part, par un premier conduit de liaison 25b sur lequel est monté un échangeur indirect de chaleur 26b et, d'autre part, par un deuxième conduit de liaison 27b sur lequel est monté une vanne 28b. La première extrémité 19a de l'unité d'épuration du réacteur mixte 2a est munie d'un conduit 29a, qui est relié, d'une part, par un conduit 30a muni d'une vanne 31a au conduit 17 prolongeant l'échangeur indirect de chaleur 16 et, d'autre part, par un conduit 32a muni d'une vanne 33a, à un conduit 34 connecté lui même à l'orifice d'aspiration d'une soufflante 35 et sur lequel est monté un condenseur à soufre 36. De même la première extrémité 19b de l'unité d'épuration du réacteur mixte 2b est munie d'un conduit 29b, qui est relié, d'une part, par un conduit 30b muni d'une vanne 31b au conduit 17 précité et, d'autre part, par un conduit 32b muni d'une vanne 33b audit conduit 34 en un point de ce conduit situé entre le condenseur à soufre 36 et le conduit 32a.

La deuxième extrémité 23a de l'unité d'oxydation catalytique 4a du réacteur mixte 2a est munie d'un conduit 37a, qui est relié, d'une part, par un conduit 38a muni d'une vanne 39a à un conduit 40 d'évacuation du gaz résiduaire épuré et, d'autre part, par un conduit 41a muni d'une vanne 42a à un conduit 43 prolongeant l'orifice de refoulement de la soufflante 35. Le conduit 43 traverse un réchauffeur 44 et porte une dérivation 45, qui est munie d'une vanne 46 et court-circuite le réchauffeur, et il comporte également une vanne 47 située entre le réchauffeur et la partie de la dérivation 45 en amont du réchauffeur. De même, la deuxième extrémité 23b de l'unité d'oxydation catalytique 4b du réacteur mixte 2b est munie d'un conduit 37b, qui est relié, d'une part, par un conduit 38b muni d'une vanne 39b audit conduit 40 d'évacuation du gaz résiduaire épuré et, d'autre part, par un conduit 41b muni d'une vanne 42b au conduit 43 entre la dérivation 45 et le conduit 41a.

Un conduit 48 d'amenée d'air muni d'une vanne 49 à ouverture réglable est relié, par une tubulure 50a munie d'une vanne 56a, au conduit 25a, dans la partie dudit conduit débouchant dans l'unité d'oxydation catalytique 4a du réacteur mixte 2a, pour l'injection d'air dans ladite unité et, par une tubulure 50b munie d'une vanne 56b, au conduit 25b, dans la partie dudit conduit débouchant dans l'unité d'oxydation catalytique 4b du réacteur mixte 2b. Un régulateur 51 de teneur en oxygène est monté sur le conduit 40 d'évacuation du gaz résiduaire en aval des conduits 38a et 38b et règle l'ouverture de la vanne 49 du conduit 48 d'amenée d'air, ce qui assure l'ajustement du débit d'air en excès introduit dans l'unité d'oxydation catalytique de chaque réacteur mixte.

Un conduit d'équilibrage 52 muni d'une vanne 53 relie le conduit 17, en un point de ce dernier conduit situé entre le régulateur 18 et la jonction du conduit 17 et du conduit 30a, au conduit 34, en un point de ce conduit 34 situé entre la soufflante 35 et le condenseur à soufre 36, tandis qu'un conduit de purge 54 muni d'une vanne 55 relie le conduit 43, en un point de ce dernier situé entre la soufflante 35 et le réchauffeur 44, au conduit 8 en un point de ce dernier situé en amont de l'échangeur indirect de chaleur 9.

Chacun des lits catalytiques de chaque réacteur mixte peut être équipé, si besoin est, d'un système de maintien du lit catalytique en température, ledit système pouvant être de tout type connu comme indiqué précédemment.

Le déroulement du procédé dans cette installation peut être schématisé comme suit.

On suppose que le réacteur mixte 2a est en phase de réaction et que le réacteur mixte 2b est en phase de régénération, les vannes 31a, 39a, 28b, 33b, 42b, 47 et 56a étant ouvertes tandis que les vannes 28a, 33a, 42a, 31b, 39b, 46 et 56b sont fermées, les vannes d'équilibrage 53 et de purge 55 étant ouvertes.

Le gaz résiduaire à traiter, qui est issu d'une usine à soufre CLAUS et renferme H₂S, SO₂, COS et CS₂, est réchauffé à la température appropriée par passage dans l'échangeur indirect de chaleur 9 puis dans le brûleur en ligne 10, puis il est additionné d'air amené par le conduit 13 à travers la vanne à ouverture réglable 14 et le mélange obtenu passe dans l'unité d'oxydation et d'hydrolyse 1, dans laquelle les composés COS et CS₂ présents dans ledit gaz résiduaire sont hydrolysés en H₂S au contact du catalyseur contenu dans l'unité d'oxydation et d'hydrolyse 1, tandis qu'également au contact dudit catalyseur une fraction de l'H₂S contenu dans le gaz résiduaire est oxydée en SO₂ et en soufre par l'oxygène de l'air injecté par le conduit 13. En outre, l'unité d'oxydation et d'hydrolyse est également en mesure d'effectuer la réaction de CLAUS entre H₂S et SO₂, surtout si le rendement de l'usine à soufre en amont est faible, et donc de maintenir la teneur globale en H₂S et SO₂ dans le gaz résiduaire hydrolysé à un niveau suffisamment faible pour que les performances de l'installation de traitement de gaz résiduaire ne soient pas affectées par un mauvais rendement de l'usine à soufre. Par la sortie 6 de l'unité d'oxydation et d'hydrolyse, on évacue un gaz résiduaire hydrolysé et oxydé renfermant H₂S et SO₂, éventuellement du soufre vapeur et substantiellement exempt de COS et CS₂. La régulation du débit d'air introduit dans l'unité d'oxydation et d'hydrolyse 1, assure le maintien d'une quantité (H₂S)-2(SO₂) ayant la valeur choisie allant de 0,25 % à 0,5 % et plus spécialement de 0,25 % à 0,35 % dans le gaz résiduaire hydrolysé et oxydé.

Après passage dans l'échangeur de chaleur 9, puis dans l'échangeur de chaleur 16, le gaz résiduaire hydrolysé, dont la température est alors comprise entre 100°C et 180°C, est amené par le conduit 17, puis les conduits 30a et 29a, dans l'unité d'épuration 3a du réacteur mixte 2a en phase de réaction. Dans ladite unité d'épuration, les composés H₂S et SO₂ présents dans le gaz résiduaire hydrolysé réagissent l'un sur l'autre au contact du catalyseur CLAUS contenu dans cette unité d'épuration pour former du soufre qui se dépose sur ledit catalyseur,. Par le conduit 25a sort un gaz résiduaire substantiellement épuré, qui renferme H₂S comme seul composé soufré en concentration inférieure à 0,5 % en volume. Après que sa température ait été amenée à une valeur comprise entre 85°C et 100°C, le gaz résiduaire substantiellement épuré est additionné, par le conduit 50a, d'une quantité d'air, issue du conduit 48 à travers la vanne à ouverture réglable 49, en excès par rapport à la quantité stoechiométrique nécessaire pour oxyder complètement en soufre la totalité de l'H₂S dudit gaz résiduaire substantiellement épuré et le mélange obtenu est injecté dans l'extrémité 22a de l'unité d'oxydation catalytique 4a du réacteur mixte 2a. L'air en excès injecté dans l'unité d'oxydation catalytique 4a est contrôlé pour permettre l'élimination totale de l'H₂S dans le gaz résiduaire épuré. Dans ladite unité d'oxydation catalytique 4a, qui tout comme l'unité d'oxydation catalytique 4b du réacteur mixte 2b contient un catalyseur d'oxydation sélective de l'H₂S en soufre et par exemple un catalyseur tel que décrit précédemment, l'H₂S du gaz résiduaire substantiellement épuré est oxydé sélectivement en soufre par l'oxygène au contact du catalyseur d'oxydation selon la réaction H₂S+1/2 O₂ → S+H₂O aux températures d'opération allant de 90°C à 120°C, le soufre formé se déposant sur le catalyseur.

Par le conduit 37a du réacteur mixte 2a sort un gaz résiduaire épuré quasi totalement, qui est dirigé par le conduit 38a, à travers la vanne 39a, dans le conduit 40 d'évacuation du gaz résiduaire épuré. La teneur en H₂S du gaz résiduaire substantiellement épuré entrant dans le réacteur d'oxydation catalytique 4a reste faible quel que soit le rendement de l'usine à soufre et le rendement de l'installation est indépendant du rendement de l'usine à soufre.

Un courant de gaz de balayage non oxydant est envoyé par la soufflante 35 dans le conduit 43 à travers la vanne 47 et le réchauffeur 44, dans lequel ce courant gazeux est réchauffé à la température appropriée pour la régénération. Le courant gazeux réchauffé circulant dans le conduit 43, est introduit dans le réacteur mixte 2b par le conduit 41b, à travers la vanne 42b, et le conduit 37b et balaie tout d'abord le catalyseur d'oxydation catalytique 24b chargé de soufre contenu dans l'unité d'oxydation catalytique 4b du réacteur mixte 2b, puis, après passage par le conduit 27b à travers la vanne 28b, le catalyseur CLAUS 21b chargé de soufre contenu dans l'unité d'épuration 3b dudit réacteur mixte 2b. Le courant de gaz de balayage, entraînant le soufre vaporisé, sort du réacteur mixte 2b par le conduit 29b et s'écoule par le conduit 32b, à travers la vanne 33b, jusqu'au condenseur à soufre 36, dans lequel la majeure partie du soufre se sépare par condensation. A la sortie du condenseur 36, le courant de gaz de balayage est repris par la soufflante 35 pour être refoulé dans le conduit 43 comme indiqué plus haut.

Après une durée suffisante de balayage des catalyseurs contenus dans le réacteur mixte 2b, par le gaz de balayage passant dans le réchauffeur 44, pour éliminer complètement le soufre déposé sur les catalyseurs, on ouvre la vanne 46 et ferme la vanne 47 de manière à court-circuiter le réchauffeur 44 et à abaisser la température du gaz de balayage, et l'on poursuit le balayage pendant une durée appropriée pour refroidir les catalyseurs régénérés 21b et 24b contenus dans le réacteur mixte 2b.

Lorsque lesdits catalyseurs ont été refroidis à une température convenable permettant leur réutilisation en phase de réaction, on permute les rôles joués par les réacteurs mixtes 2a et 2b, c'est-à-dire qu'on amène le réacteur 2b en phase de réaction CLAUS et d'oxydation catalytique et le réacteur 2a en phase de régénération/refroidissement en fermant les vannes 31a, 39a, 28b, 33b, 42b, 46 et 56a et en ouvrant les vannes 28a, 33a, 42a, 31b, 39b, 47 et 56b. Pendant la période transitoire de permutation des rôles des réacteurs mixtes 2a et 2b, on amène le gaz de balayage à circuler dans un conduit non représenté bipassant ces réacteurs.

Pour compléter la description du procédé selon l'invention présentée ci-dessus, on donne ci-après, à titre non limitatif, un exemple de mise en oeuvre dudit procédé.

### EXEMPLE :

En faisant appel à une installation analogue à celle qui est schématisée sur la figure du dessin annexé et qui fonctionne comme décrit précédemment, on traitait un gaz résiduaire d'usine à soufre ayant la composition suivante en pourcentage en volume, hors soufre vapeur et vésiculaire.

| | | | | | |
|---|---|---|---|---|---|
| H₂S | 1,35 | H₂O | 33,22 | CO | 0,34 |
| SO₂ | 0,43 | N₂ | 58,47 | COS | 0,01 |
| CO₂ | 3,37 | H₂ | 2,80 | CS₂ | 0,01 |

Ledit gaz résiduaire était issu d'une usine à soufre CLAUS dans laquelle on effectuait l'oxydation ménagée, par l'air, d'un gaz acide constitué, en volume, de 90 % d'H₂S, 5,4 % de CO₂, 4 % d'eau et 0,6 % d'hydrocarbures.

Le rendement de récupération de l'usine à soufre fournissant le gaz résiduaire était égal à 94,5 %.

L'unité d'oxydation et d'hydrolyse renfermait un catalyseur promoteur à la fois de l'hydrolyse des composés COS et CS₂ en H₂S et de l'oxydation de l'H₂S, ledit catalyseur consistant en extrudés, de 4 mm de diamètre, d'oxyde de titane renfermant 10 % en poids de sulfate de calcium.

Dans chacun des réacteurs mixtes 2a et 2b, l'unité d'épuration CLAUS basse température, respectivement 3a et 3b, renfermait un catalyseur CLAUS consistant en billes, de 2 à 5 mm de diamètre, d'une alumine activée imprégnée de 7 % en poids d'oxyde de titane et présentant une surface spécifique, déterminée par la méthode BET d'adsorption d'azote, égale à environ 240 m²/g et l'unité d'oxydation catalytique, respectivement 4a et 4b, renfermait un catalyseur d'oxydation sélective de l'H₂S en soufre consistant en une alumine au nickel renfermant, en poids, 4 % de nickel, ledit catalyseur étant obtenu par imprégnation d'une alumine à l'aide de la quantité appropriée d'acétate de nickel en solution aqueuse, puis séchage à 100°C de l'alumine imprégnée et enfin calcination du produit séché pendant 3 heures. Ce catalyseur présentait un volume poreux égal à 55 cm³ par 100 g de catalyseur.

Le gaz résiduaire à traiter, arrivant de l'usine à soufre avec un débit de 380 kmoles/h, était porté à 283°C après passage dans l'échangeur indirect de chaleur 9 puis dans le brûleur en ligne 10, et était ensuite additionné de 2,5 kmoles/h d'air pour obtenir, dans le gaz résiduaire hydrolysé sortant de l'unité d'hydrolyse et d'oxydation 1 des teneurs en H₂S et SO₂, exprimées en pourcentages volumiques (H₂S) et (SO₂), telles que (H₂S)-2(SO₂)= 0,25 %. Le mélange de gaz résiduaire et d'air obtenu était introduit à la température de 283°C dans l'unité d'oxydation et d'hydrolyse 1. Le temps de séjour du mélange réactionnel au contact du catalyseur contenu dans ladite unité 1 était égal à 4 secondes dans les conditions normales de pression et de température. Le gaz résiduaire hydrolysé et oxydé sortant de l'unité d'oxydation et d'hydrolyse ne renfermait plus que des traces de COS et CS₂, le taux d'hydrolyse de ces composés étant supérieur à 99 %, et sa teneur globale en H₂S et SO₂ était inférieure à celle que l'on pouvait prévoir à partir des seules réactions d'hydrolyse de COS et CS₂ et de l'oxydation d'une fraction d'H₂S en SO₂, ce qui indique que du soufre s'est également formé par la réaction de CLAUS. La température en sortie de l'unité d'oxydation et d'hydrolyse 1 était égale à 300°C, le gaz résiduaire oxydé et hydrolysé ne renfermant plus d'oxygène.

Le gaz résiduaire oxydé et hydrolysé était ensuite refroidi à 130°C par passage dans l'échangeur indirect de chaleur 9 puis dans l'échangeur de chaleur 16, puis il était injecté à cette température et avec des teneurs en H₂S et SO₂ maintenues à des valeurs telles que (H₂S)-2(SO₂)=0,25 %, par le régulateur 18 agissant sur la vanne 14 montée sur le conduit 13, dans l'unité d'épuration CLAUS basse température 3a du réacteur mixte 2a opérant en phase de réaction. Dans ladite unité 3a, les composés H₂S et SO₂ contenus dans le gaz résiduaire hydrolysé réagissaient entre eux au contact du catalyseur CLAUS pour former du soufre se déposant sur le catalyseur et un gaz résiduaire substantiellement épuré ayant une température d'environ 145°C et renfermant H₂S comme seul composé soufré en concentration égale à 2500 ppm en volume était évacué de l'unité d'épuration 3a par le conduit 25a. Ledit gaz résiduaire substantiellement épuré était refroidi à 90°C dans l'échangeur indirect de chaleur 26a, puis additionné d'air en quantité représentant 3,3 fois la quantité stoechiométrique nécessaire pour une oxydation complète de l'H₂S en soufre et le mélange obtenu était injecté dans l'extrémité 22a de l'unité 4a d'oxydation catalytique. Au contact du catalyseur d'oxydation présent dans l'unité d'oxydation catalytique 4a, l'H₂S du gaz résiduaire substantiellement épuré était oxydé quasi totalement en soufre par l'oxygène de l'air additionné audit gaz résiduaire, ledit soufre se déposant sur le catalyseur. Par le conduit 37a, on évacuait de l'unité d'oxydation catalytique 4a du réacteur mixte 2a un gaz résiduaire épuré qui était acheminé par le conduit 38a, à travers la vanne 39a, dans le conduit 40 d'évacuation du gaz résiduaire traité. Ledit gaz résiduaire traité, dont la température était égale à 107°C, ne renfermait plus que des traces de composés soufrés, à savoir moins de 200 ppm en volume, ainsi qu'une quantité d'oxygène représentant l'excès, maintenu par le régulateur 51 agissant sur la vanne 49 à ouverture réglable du conduit 48, non consommé lors de la phase d'oxydation catalytique dans l'unité d'oxydation catalytique 4a du réacteur mixte 2a.

Le gaz de balayage, utilisé pour la régénération des catalyseurs chargés de soufre contenus dans le réacteur mixte 2b en phase de régénération puis refroidissement, était constitué d'une partie du gaz résiduaire oxydé et hydrolysé refroidi prélevée sur le conduit 17 par le conduit 52. Ledit gaz de balayage était introduit par le conduit 37b dans le réacteur mixte 2b en phase de régénération après avoir été amené à une température comprise entre 250°C et 350°C dans le réchauffeur 44 du circuit de régénération. Le gaz de balayage chargé de soufre, issu du réacteur mixte 2b en phase de régénération par le conduit 29b, passait ensuite dans le condenseur à soufre 36 du circuit de régénération, pour y être refroidi à environ 125°C de manière à séparer la plus grande partie du soufre qu'il contenait, puis il retournait au réchauffeur 44 pour être réutilisé pour la régénération. Les catalyseurs régénérés étaient ensuite refroidis en faisant passer, dans le réacteur mixte les contenant, le gaz de balayage issu du condenseur 36 et circulant par la dérivation 45 court-circuitant le réchauffeur 44.

Les réacteurs mixtes 2a et 2b opéraient alternativement pendant 30 heures en phase de réaction et pendant 30 heures, dont 10 heures de refroidissement, en phase de régénération/refroidissement.

Le rendement en soufre de l'ensemble comportant l'usine à soufre fournissant le gaz résiduaire à traiter, l'unité d'oxydation et d'hydrolyse 1 et les réacteurs mixtes 2a et 2b renfermant chacun une unité d'épuration CLAUS basse température, respectivement 3a et 3b, suivie d'une unité d'oxydation catalytique, respectivement 4a et 4b, était supérieur à 99,9 %.

## Revendications

1. Procédé d'élimination quasi totale des composés soufrés H₂S, SO₂, COS et/ou CS₂ contenus dans un gaz résiduaire d'une usine à soufre, qui réalise une oxydation ménagée de l'H₂S d'un gaz acide au moyen d'un gaz renfermant de l'oxygène libre, avec récupération desdits composés soufrés sous la forme de soufre, lequel procédé est du type dans lequel on met en contact ledit gaz résiduaire issu de l'usine à soufre avec un catalyseur d'hydrolyse des composés COS et CS₂ en H₂S, disposé dans une unité d'oxydation et d'hydrolyse, en opérant à une température suffisante pour produire un gaz résiduaire hydrolysé renfermant H₂S et SO₂ et substantiellement exempt de COS et CS₂, on fait passer le gaz résiduaire hydrolysé dans une unité d'épuration, après avoir amené la température dudit gaz à la valeur requise pour son passage dans cette unité, et amène les composés H₂S et SO₂ du gaz résiduaire hydrolysé à réagir entre eux dans l'unité d'épuration pour former du soufre et obtenir, en sortie de cette unité, un gaz résiduaire substantiellement épuré renfermant H₂S comme seul composé soufré et on introduit le gaz résiduaire substantiellement épuré dans une unité d'oxydation catalytique renfermant un catalyseur d'oxydation sélective de l'H₂S en soufre et l'on maintient le gaz résiduaire substantiellement épuré dans cette unité d'oxydation catalytique au contact du catalyseur d'oxydation en présence d'une quantité d'oxygène, injectée dans ladite unité d'oxydation catalytique sous la forme d'un courant gazeux renfermant de l'oxygène libre, en excès par rapport à la quantité stoechiométrique nécessaire pour oxyder en soufre l'H₂S du gaz résiduaire substantiellement épuré, en mettant en oeuvre l'oxydation à des températures inférieures à 150°C et il se **caractérise en ce que** l'on maintient les concentrations en H₂S et SO₂, exprimées en pourcentages volumiques (H₂S) et (SO₂), dans le gaz résiduaire hydrolysé entrant dans l'unité d'épuration à des valeurs telles que la quantité (H₂S)-2(SO₂) aille de 0,25% à 0,5%, **en ce que** la température du gaz résiduaire substantiellement épuré, introduit dans l'unité d'oxydation catalytique, est comprise entre 85°C et 100°C et **en ce que** l'oxydation de l'H₂S en soufre dans l'unité d'oxydation catalytique est réalisée à des températures allant de 90°C à 120°C.

2. Procédé selon la revendication 1, **caractérisé en ce que** l'on maintient les concentrations en H₂S et SO₂ dans le gaz résiduaire hydrolysé entrant dans l'unité d'épuration à des valeurs telles que la quantité (H₂S)-2(SO₂) aille de 0,25% à 0,35%.

3. Procédé selon la revendication 1 ou 2, **caractérisé en ce que** l'on maintient la quantité (H₂S)-2(SO₂) à la valeur choisie en faisant varier le rapport des débits de gaz renfermant H₂S et de gaz renfermant de l'oxygène libre introduits dans l'usine à soufre.

4. Procédé selon la revendication 1 ou 2, **caractérisé en ce que** l'on maintient à une valeur égale ou supérieure à 2 :1 le rapport molaire H₂S : SO₂ dans le gaz résiduaire issu de l'usine à soufre et entrant dans l'unité d'oxydation et d'hydrolyse en faisant varier le rapport des débits de gaz acide renfermant H₂S et de gaz renfermant de l'oxygène libre introduits dans l'usine à soufre, on injecte dans l'unité d'oxydation et d'hydrolyse un flux gazeux contenant de l'oxygène libre et effectue dans ladite unité une oxydation d'H₂S en SO₂ et éventuellement en soufre, en plus de l'hydrolyse de COS et/ou CS₂ en H₂S, au moyen dudit flux gazeux au contact d'un catalyseur d'oxydation de l'H₂S contenu dans cette unité et l'on maintient la quantité (H₂S)-2(SO₂) à la valeur choisie dans le gaz résiduaire hydrolysé entrant dans l'unité d'épuration en faisant varier le débit du flux gazeux contenant de l'oxygène libre introduit dans l'unité d'oxydation et d'hydrolyse.

5. Procédé selon l'une des revendications 1 à 4, **caractérisé en ce que** l'unité d'oxydation et d'hydrolyse opère à des températures comprises entre 180°C et 700°C et plus particulièrement entre 250°C et 400°C.

6. Procédé selon la revendication 4 ou 5, **caractérisé en ce que** l'unité d'oxydation et d'hydrolyse renferme un catalyseur unique promoteur à la fois de l'hydrolyse des composés COS et CS₂ en H₂S et de l'oxydation de l'H₂S.

7. Procédé selon l'une des revendications 1 à 6, **caractérisé en ce que** le temps de séjour global des gaz au contact du catalyseur ou des catalyseurs contenus dans l'unité d'oxydation et d'hydrolyse, exprimé dans les conditions normales de pression et de température, va de 0,5 seconde à 10 secondes et plus particulièrement de 1 seconde à 6 secondes.

8. Procédé selon l'une des revendications 1 à 7, **caractérisé en ce que** l'unité d'épuration est une unité d'épuration catalytique CLAUS basse température, dans laquelle le gaz résiduaire hydrolysé, présentant une température inférieure à 160°C, est mis en contact avec un catalyseur CLAUS, pour former du soufre par réaction entre H₂S et SO₂ en réalisant ledit contact à une température inférieure au point de rosée du soufre formé, notamment entre 100°C et 180°C, pour que ce soufre se dépose sur le catalyseur CLAUS, le catalyseur chargé de soufre étant périodiquement soumis à une régénération par balayage au moyen d'un gaz non oxydant entre 200°C et 500°C, plus particulièrement entre 250°C et 400°C, pour vaporiser le soufre qu'il retient, puis à un refroidissement au moyen d'un gaz à une température inférieure à 160°C jusqu'à la température requise pour une nouvelle mise en contact avec le gaz résiduaire hydrolysé, ledit gaz de refroidissement renfermant éventuellement de la vapeur d'eau au moins pendant la phase finale dudit refroidissement.

9. Procédé selon l'une des revendications 1 à 8, **caractérisé en ce que** le temps de contact des gaz avec le catalyseur d'oxydation contenu dans l'unité d'oxydation catalytique, exprimé dans les conditions normales de pression et de température, va de 0,5 seconde à 20 secondes et plus particulièrement de 1 seconde à 15 secondes.

10. Procédé selon l'une des revendications 1 à 9, **caractérisé en ce que** l'on régénère le catalyseur d'oxydation chargé de soufre présent dans l'unité d'oxydation catalytique par balayage dudit catalyseur au moyen d'un gaz non oxydant, en opérant à des températures comprises entre 200°C et 500°C et plus particulièrement entre 250°C et 450°C, pour vaporiser le soufre retenu sur le catalyseur, puis l'on refroidit le catalyseur régénéré jusqu'à la température choisie pour une nouvelle mise en oeuvre de la réaction d'oxydation catalytique, ce refroidissement étant réalisé au moyen d'un gaz ayant une température appropriée, lequel gaz de refroidissement renferme éventuellement de la vapeur d'eau au moins pendant la phase finale dudit refroidissement.

11. Procédé selon l'une des revendications 8 à 10, **caractérisé en ce que** l'unité d'épuration catalytique CLAUS basse température et l'unité d'oxydation catalytique consistent respectivement en une zone de réaction catalytique CLAUS et en une zone d'oxydation catalytique de l'H₂S en soufre, qui sont disposées en série dans un même réacteur, dit réacteur mixte, de préférence à travers un échangeur indirect de chaleur.

12. Procédé selon la revendication 11, **caractérisé en ce que** le catalyseur CLAUS et le catalyseur d'oxydation de l'H₂S contenus dans un réacteur mixte sont régénérés successivement par balayage à l'aide du même gaz de régénération et sont refroidis successivement à l'aide du même gaz de refroidissement, le gaz de refroidissement renfermant éventuellement de la vapeur d'eau au moins pendant la phase finale du refroidissement.

## Patentansprüche

1. Verfahren für die quasi totale Entfernung von in einem Restgas einer Schwefelfabrik enthaltenen Schwefelverbindungen H₂S, SO₂, COS bzw. CS₂, welches eine gezielte Oxydation des H₂S eines sauren Gases mittels eines freien Sauerstoff enthaltenden Gases durchführt, unter Rückgewinnung dieser Verbindungen in Form von Schwefel, wobei das Verfahren vom Typ ist, in welchen das aus der Schwefelfabrik stammende Restgas mit einem in einer Hydrolyse- und Oxydationseinheit befindlichen Katalysator für die Hydrolyse der Verbindungen COS und CS₂ in H₂S in Kontakt gebracht wird, unter für die Bildung von hydrolysiertem Restgas, das H₂S und SO₂ enthält und im wesentlichen frei von COS und CS₂ ist, ausreichenden Temperaturbedingungen, das hydrolysierte Restgas einer Reinigungseinheit zugeführt wird, nachdem die Temperatur des Restgases auf den für das Durchlaufen dieser Einheit erforderlichen Wert gebracht wurde, und die Verbindungen H₂S und SO₂ des hydrolysierten Restgases in der Reinigungseinheit miteinander zur Reaktion gebracht werden, um Schwefel zu bilden und am Ausgang dieser Einheit ein im wesentlichen gereinigtes Restgas zu erhalten, welches als einzige Schwefelverbindung H₂S enthält und das im wesentlichen gereinigte Restgas in eine katalytische Oxydationseinheit, in welcher sich ein Katalysator der selektiven Oxydation von H₂S in Schwefel befindet, eingeführt wird und das im wesentlichen gereinigte Restgas in dieser katalytischen Oxydationseinheit in Kontakt mit dem Oxydationskatalysator in Gegenwart einer Menge Sauerstoff gehalten wird, wobei der Sauerstoff in Form eines freien Sauerstoff enthaltenden Gasstroms in diese katalytische Oxydationseinheit eingeführt wird, und gegenüber der stöchiometrisch für die Oxydation des H₂S des im wesentlichen gereinigten Restgases in Schwefel erforderlichen Menge im Überschuss ist, und die Oxydation bei Temperaturen unterhalb von 150°C durchgeführt wird und das Verfahren gekennzeichnet ist dadurch, dass die Konzentration an H₂S und SO₂, ausgedrückt in Volumenprozent (H₂S) und (SO₂) des in die Reinigungseinheit eingebrachten hydrolysierten Restgases, auf derartige Werte gehalten wird, dass die Menge (H₂S)-2(SO₂) 0,25 bis 0,5% beträgt, dass die Temperatur des in die katalytische Oxydationseinheit eingebrachten im wesentlichen gereinigten Restgases zwischen 85 und 100°C beträgt und dass die Oxydation von H₂S in Schwefel in der katalytischen Oxydationseinheit bei Temperaturen von 90°C bis 120°C durchgeführt wird.

2. Verfahren gemäß Anspruch 1, **gekennzeichnet dadurch**, dass die Konzentration an H₂S und SO₂ in dem in die Reinigungseinheit eingebrachten hydrolysierten Restgas auf derartige Werte gehalten wird, dass die Menge (H₂S)-2(SO₂) 0,25 bis 0,35% beträgt.

3. Verfahren gemäß Anspruch 1 oder 2, **gekennzeichnet dadurch**, dass die Menge (H₂S)-2(SO₂) **durch** Veränderung des Durchsatzverhältnisses von in die Schwefelfabrik eingeführtem H₂S enthaltendem Gas zu freien Sauerstoff enthaltendem Gas auf den gewählten Wert gehalten wird.

4. Verfahren gemäß Anspruch 1 oder 2, **gekennzeichnet dadurch**, dass das Molverhältnis H₂S : SO₂ in dem aus der Schwefelfabrik stammenden und in die Reinigungs- und Hydrolyseeinheit eingebrachten Restgas **durch** Veränderung des Durchsatzverhältnisses von in die Schwefelfabrik eingeführtem, saurem, H₂S enthaltendem Gas und freien Sauerstoff enthaltendem Gas auf einen Wert gleich oder größer als 2 : 1 gehalten wird, ein Gasstrom in die Oxydations- und Hydrolyseeinheit eingebracht wird welcher freien Sauerstoff enthält und in dieser Einheit eine Oxydation von H₂S in SO₂ und gegebenenfalls in Schwefel zusätzlich zu der Hydrolyse von COS und/oder CS₂ in H₂S durchgeführt wird, mittels des Gasstroms in Kontakt mit einem in dieser Einheit befindlichen Katalysator der Oxydation von H₂S und die Menge (H₂S)-2(SO₂) in dem in die Reinigungseinheit eingebrachten hydrolysierten Restgas **durch** Veränderung des Durchsatzes des in die Oxydations- und Hydrolyseeinheit eingebrachten freien Sauerstoff enthaltenden Gasstroms auf den gewählten Wert gehalten wird.

5. Verfahren gemäß mindestens einem der Ansprüche 1 bis 4, **gekennzeichnet dadurch**, dass die Oxydations- und Hydrolyseeinheit bei Temperaturen zwischen 180 und 700°C und insbesondere zwischen 250 und 400°C betrieben wird.

6. Verfahren gemäß Anspruch 4 oder 5, **gekennzeichnet dadurch**, dass die Oxydations- und Hydrolyseeinheit einen einzigen Katalysator enthält, welcher sowohl die Hydrolyse von COS und CS₂ in H₂S als auch die Oxydation von H₂S fördert.

7. Verfahren gemäß mindestens einem der Ansprüche 1 bis 6, **gekennzeichnet dadurch**, dass die globale Aufenthaltsdauer des Gases in Kontakt mit dem oder den in der Oxydations und Hydrolyseeinheit enthaltenen Katalysator oder Katalysatoren, unter normalen Druck- und Temperaturbedingungen ausgedrückt, 0,5 bis 10 Sekunden und insbesondere 1 bis 6 Sekunden beträgt.

8. Verfahren gemäß mindestens einem der Ansprüche 1 bis 7, **gekennzeichnet dadurch**, dass die Reinigungseinheit eine CLAUS-katalytische Reinigungseinheit bei niedriger Temperatur ist, in welcher das hydrolysierte Restgas, welches eine Temperatur unterhalb von 160°C aufweist, mit einem CLAUS-Katalysator in Kontakt gebracht wird um **durch** Reaktion zwischen H₂S und SO₂ Schwefel zu bilden, wobei der Kontakt bei einer Temperatur unterhalb des Taupunktes des gebildeten Schwefels durchgeführt wird, insbesondere zwischen 100 und 180°C, damit der Schwefel sich auf dem CLAUS-Katalysator absetzt, und der mit Schwefel beladene Katalysator regelmäßig einer Regenerierung **durch** Spülung mittels eines nichtoxydierenden Gases zwischen 200 und 500°C, insbesondere zwischen 150 und 400°C unterzogen wird, um den auf diesem zurückgehaltenen Schwefel zu verdampfen, und anschließend einer Abkühlung mittels eines Gases mit einer Temperatur unterhalb von 160°C auf die für eine neuerlichen Kontakt mit dem hydrolysierten Restgas erforderliche Temperatur unterzogen wird, wobei das Abkühlgas zumindest während der Endphase der Abkühlung gegebenenfalls Wasserdampf enthält.

9. Verfahren gemäß mindestens einem der Ansprüche 1 bis 8, **gekennzeichnet dadurch**, dass die Kontaktzeit des Gases mit dem in der Oxydations- und Hydrolyseeinheit enthaltenen Oxydationskatalysator, ausgedrückt unter normalen Druck- und Temperaturbedingungen, 0,5 bis 20 Sekunden und insbesondere 1 bis 15 Sekunden beträgt.

10. Verfahren gemäß mindestens einem der Ansprüche 1 bis 9, **gekennzeichnet dadurch**, dass der in der Oxydationseinheit anwesende, mit Schwefel beladene Oxydationskatalysator **durch** Spülen dieses Katalysators mittels einem nichtoxydierenden Gas, bei Temperaturen zwischen 200 und 500°C, insbesondere zwischen 250 und 450°C regeneriert wird, um den auf dem Katalysator zurückgehaltenen Schwefel zu verdampfen, und anschließend der regenerierte Katalysator mittels eines Gases einer angemessenen Temperatur auf die für einen neuerlichen Kontakt mit dem hydrolysierten Restgas gewählte Temperatur abgekühlt wird, wobei das Abkühlgas zumindest während der Endphase der Abkühlung gegebenenfalls Wasserdampf enthält.

11. Verfahren gemäß mindestens einem der Ansprüche 8 bis 10, **gekennzeichnet dadurch**, dass die CLAUS-katalytische Reinigungseinheit bei niedriger Temperatur und die katalytische Oxydationseinheit jeweils aus einer CLAUS-katalytischen Reaktionszone und einer kätalytischen Oxydationszone des H₂S in Schwefel bestehen, welche in demselben Reaktor, genannt Mischreaktor, in Serie geschaltet sind, vorzugsweise über einen indirekten Wärmetauscher.

12. Verfahren gemäß Anspruch 11, **gekennzeichnet dadurch**, dass der in einem Mischreaktor enthaltene Claus-Katalysator und Oxydationskatalysator des H₂S nacheinander **durch** Spülung mithilfe desselben Regenerierungsgases regeneriert werden und nacheinander mithilfe desselben Abkühlgases abgekühlt werden, wobei das Abkühlgas zumindest während der Endphase der Abkühlung gegebenenfalls Wasserdampf enthält.

## Claims

1. Process for virtually total removal of the sulphur compounds H₂S, SO₂, COS and/or CS₂ which are present in a residual gas from a sulphur plant, which carries out a controlled oxidation of the H₂S in a sour gas by means of a gas containing free oxygen, with recovery of the said sulphur compounds in the form of sulphur, which process is of the type in which the said residual gas originating from the sulphur plant is brought into contact with a catalyst of hydrolysis of the compounds COS and CS₂ to H₂S, placed in an oxidation and hydrolysis unit, the operation being carried out at a temperature which is sufficient to produce a hydrolysed residual gas containing H₂S and SO₂ and substantially free from COS and SO₂, the hydrolysed residual gas is passed into a purification unit after having brought the temperature of the said gas to the value required for its flow into this unit, and the compounds H₂S and SO₂ in the hydrolysed residual gas are caused to react with each other in the purification unit to form sulphur and to obtain, at the exit of this unit, a substantially purified residual gas containing H₂S as the only sulphur compound and the substantially purified residual gas is introduced into a catalytic oxidation unit containing a catalyst of selective oxidation of H₂S to sulphur and the substantially purified residual gas is maintained in this catalytic oxidation unit in contact with the oxidation catalyst in the presence of a quantity of oxygen which is injected into the said catalytic oxidation unit in the form of a gas stream containing free oxygen in excess in relation to the stoichiometric quantity needed for oxidizing to sulphur the H₂S in the substantially purified residual gas, the oxidation being carried out at temperatures lower than 150°C, and it is **characterized in that** the H₂S and SO₂ concentrations, expressed as volume percentages (H₂S) and (SO₂), are maintained in the hydrolysed residual gas entering the purification unit at values such that the quantity (H₂S)-2(SO₂) ranges from 0.25 to 0.5%, **in that** the temperature of the substantially purified residual gas introduced into the catalytic oxidation unit is comprised betwenn 80°C and 100°C, and **in that** the oxidation of H₂S to sulphur in the catalytic oxidation unit is carried out at temperatures ranging from 90°C to 120°C.

2. Process according to Claim 1, **characterized in that** the H₂S and SO₂ concentrations in the hydrolysed residual gas entering the purification unit are maintained at values such that the quantity (H₂S)-2(SO₂) ranges from 0.25 % to 0.35 %.

3. Process according to Claim 1 or 2, **characterized in that** the quantity of (H₂S)-2(SO₂) is kept at the selected value by varying the ratio between the flow rate of H₂S-containing gas and the gas containing free oxygen, introduced into the sulphur plant.

4. Process according to one of Claims 1 or 2, **characterized in that** the H₂S:SO₂ molar ratio in the residual gas originating from the sulphur plant and entering the oxidation and hydrolysis unit is maintained at a value equal to or higher than 2:1 by varying the ratio of the flow rates of sour gas containing H₂S and of gas containing free oxygen which are introduced into the sulphur plant, a gas flow containing free oxygen is injected into the oxidation and hydrolysis unit and an oxidation of H₂S to SO₂ and optionally to sulphur is performed in the said unit, in addition to the hydrolysis of COS and/or CS₂ to H₂S, by means of the said gas flow in contact with a catalyst of oxidation of H₂S, present in this unit, and the quantity (H₂S)-2(SO₂) is maintained at the chosen value in the hydrolysed residual gas entering the purification unit by varying the flow rate of the gas flow containing free oxygen introduced into the oxidation and hydrolysis unit.

5. Process according to one of Claims 1 to 4, **characterized in that** the oxidation and hydrolysis unit operates at temperatures of between 180°C and 700°C and more particularly between 250°C and 400°C.

6. Process according to Claim 4 or 5, **characterized in that** the oxidation and hydrolysis unit contains a single catalyst promoting both the hydrolysis of the compounds COS and CS₂ to H₂S and the oxidation of H₂S.

7. Process according to one of Claims 1 to 6, **characterized in that** the overall residence time of the gases in contact with the catalyst or the catalysts present in the oxidation and hydrolysis unit, expressed in the standard conditions of pressure and temperature, ranges from 0.5 seconds to 10 seconds and more particularly from 1 second to 6 seconds.

8. Process according to one of Claims 1 to 7, **characterized in that** the purification unit is a low-temperature Claus catalytic purification unit in which the hydrolysed residual gas which is at a temperature lower than 160°C is brought into contact with a Claus catalyst to form sulphur by reaction between H₂S and SO₂, the said contact being brought about at a temperature which is lower than the dew point of the sulphur formed, especially between 100°C and 180°C, in order that this sulphur may be deposited on the Claus catalyst, the sulphur-laden catalyst being at regular intervals subjected to a regeneration by purging by means of a nonoxidizing gas between 200°C and 500°C, more particularly between 250°C and 400°C, to vaporize the sulphur which it retains, and then to a cooling by means of a gas at a temperature which is lower than 160°C to the temperature required for a new bringing into contact with the hydrolysed residual gas, the said coolant gas optionally containing water vapour at least during the final stage of the said cooling.

9. Process according to one of Claims 1 to 8, **characterized in that** the contact time of the gases with the oxidation catalyst present in the catalytic oxidation unit, expressed in the standard conditions of pressure and temperature, ranges from 0.5 seconds to 20 seconds and more particularly from 1 second to 15 seconds.

10. Process according to one of Claims 1 to 9, **characterized in that** the sulphur-laden oxidation catalyst present in the catalytic oxidation unit is regenerated by purging the said catalyst by means of a nonoxidizing gas, the operation being carried out at temperatures of between 200°C and 500°C and more particularly between 250°C and 450°C, to vaporize the sulphur retained on the catalyst, and the regenerated catalyst is then cooled to the temperature chosen for a new implementation of the catalytic oxidation reaction, this cooling being carried out by means of a gas which is at an appropriate temperature, which coolant gas optionally contains water vapour at least during the final stage of the said cooling.

11. Process according to one of Claims 8 to 10, **characterized in that** the low-temperature Claus catalytic purification unit and the catalytic oxidation unit consist, respectively, of a Claus catalytic reaction zone and of a zone for catalytic oxidation of H₂S to sulphur, which are arranged in series in the same reactor, called a mixed reactor, preferably through an indirect heat exchanger.

12. Process according to Claim 11, **characterized in that** the Claus catalyst and the catalyst of oxidation of H₂S which are present in a mixed reactor are regenerated successively by purging with the aid of the same regenerating gas and are cooled successively with the aid of the same coolant gas, the coolant gas optionally containing water vapour at least during the final stage of the cooling.
